Europäisches Patentamt

European Patent Office

Office européen des brevets

(19)

(11) EP 0 769 315 A1

(12) EUROPEAN PATENT APPLICATION

(43) Date of publication:
23.04.1997 Bulletin 1997/17

(51) Int. Cl.⁶: **A63H 33/00**, A63F 9/00,
A23G 3/00

(21) Application number: 96202768.6

(22) Date of filing: 04.10.1996

(84) Designated Contracting States:
BE DE GB NL SE

(30) Priority: 05.10.1995 NL 1001356

(71) Applicant: **Red Band Venco B.V.**
4801 LH Breda (NL)

(72) Inventors:
• **Van Zijl, Margriet Maria Alberdine**
5211 AS 's-Hertogenbosch (NL)
• **De Ries, Petrus Antonius Coenradus**
4921 DV Made (NL)
• **Helming, Gerardus Johannus Wilhelmus Maria**
3703 GD Zeist (NL)
• **Van Amerongen, Ronald Philip**
3871 TJ Hoevelaken (NL)

(74) Representative: **de Bruijn, Leendert C.**
**Nederlandsch Octrooibureau**
P.O. Box 29720
2502 LS Den Haag (NL)

(54) **Children's play product comprising a pulverulent confectionery preparation**

(57) The invention relates to a children's play product, comprising a prepacked pulverulent confectionery preparation, suitable for making a kneadable dough, and means for shaping the dough, wherein the confectionery preparation preferably contains the following substances:

A one or more pulverulent edible sugars or sugar substitutes, chosen from the saccharides group, such as sucrose, dextrose, lactose, maltose or fructose, or from the polyols group, such as lactitol and sorbitol, or polydextrose;
B at least one binder which, after adding water to the pulverulent preparation and mixing, produces a kneadable, essentially coherent mass,
C optionally other additives customary for confectionery, such as colorants, flavourings, aroma substances and edible acid.

EP 0 769 315 A1

## Description

The invention relates to a children's play product, comprising a prepacked pulverulent confectionery preparation, suitable for making a kneadable dough, and means for shaping the dough.

The invention is based on the concept of composing a product or combination of products (pack) with which people can make their own confectionery at home. For children, in particular, it is attractive to prepare confectionery from specific basic materials and to determine for themselves what the ultimate shape of the confectionery they have made themselves will be.

Within the framework of the present invention "pulverulent confectionery preparation" must be interpreted broadly. Thus, "pulverulent" also comprises grains, granulates and the like, in general particles having a diameter of less than a few millimetres, for example less than 3 mm and in particular less than 2 mm. "Confectionery preparation" is understood to be any preparation or any recipe from which confectionery can be prepared. "Prepacked" means a packaging which is intended for the end user,

The concept on which the invention is based is completely novel. However, it is pointed out that powder mixtures which, after adding water, produce a dough which can set hard to produce a solid end product are known from the prior art. Thus, for example, GB-A-2 209 917 indicates that a powder mixture which is based on sugar and which contains gelatine which is soluble in cold water is suitable for making so-called "sugar craft". The end products concerned here are shapes such as flowers and the like used to decorate cakes and other patisserie products. The process concerned here is thus an industrial process which has nothing to do with playing or playthings. This is also the case in, for example, US-A-4 097 616, in which a method for making soft confectionery from a soft paste is described. For this purpose the following are mixed at a temperature of about 45-60 °C:

(1) a relatively large quantity of a crystalline "sweetener" chosen from the group comprising a polyhydric alcohol, sucrose, glucose and mixtures thereof,
(2) a binder, which comprises a gelatine sol, and
(3) colorants and flavourings and the like.

The soft paste is extruded to form bars or sheets and the confectionery is then shaped. This method as well has nothing to do with the production of a children's play product. Nowhere in the prior art is it stated that "instant powders" supplied in a pack with shaping aids could serve as a plaything.

The invention preferably relates to a play product of the type mentioned in the preamble, in which one or more sealed sachets containing confectionery preparation and one or more small moulds for holding dough made from the powder are contained in a box pack.

The box pack according to the invention preferably also contains aids such as a rolling pin, a spatula or shaping knife and a measuring beaker for measuring out water.

A particularly pleasing effect, which is attractive to children, is obtained by formulating the pulverulent confectionery preparation which is contained in the sachets in such a way that the tastes and/or the colours thereof differ from one another.

The pulverulent confectionery preparation preferably has a composition which yields a dough which sets hard after a certain time, for example a few hours, such as 1-10 hours, at room temperature. Consequently children have the opportunity to play with the dough, just as they can with play dough. Finally the definitive shape can then be chosen, which shape is allowed to set hard.

The invention also relates to a refill product intended for the play product according to the invention as described above, which refill product comprises one or more sealed sachets containing the confectionery preparation.

In particular, the play product according to the invention contains a confectionery preparation which comprises the following substances:

A one or more pulverulent edible sugars or sugar substitutes, chosen from the saccharides group, such as sucrose, dextrose, lactose, maltose or fructose, or from the polyols group, such as lactitol and sorbitol, or polydextrose;
B optionally at least one binder which, after adding water to the pulverulent preparation and mixing, produces a kneadable, essentially coherent mass,
C optionally other additives customary for confectionery, such as colorants, flavourings, aroma substances and edible acid.

According to a preferred embodiment, the preparation according to the invention comprises
90 - 99.9 % by wt A
0.1 - 10 % by wt B
0.1 - 10 % by wt C,
where the said quantities are related to the total weight of the preparation, and the sum of the quantities of A, B and C makes up a total of 100 % by wt.

With the method according to the invention, in principle the sugars and sugar substitutes, binders and other additives, such as colorants, flavourings and aroma substances, can be used which are generally known in the science of the formulation of confectionery for sucking and chewing. Only the most common sugars and sugar substitutes which to date have been found to be suitable have been mentioned above as non-limiting examples.

Although it is possible to add a preservative to the preparation, the confectionery preparation according to the invention processed to give an end product automatically acquires long-lasting quality if the quantity of sugar is high and in general makes up more than 75 % by wt of the total preparation.

Even without binder (constituent B), the pulverulent confectionery preparation according to the invention can produce a more or less kneadable mass after mixing, but this does not have good cohesion and frequently is nothing like modelling clay. As already stated, the concept on which the invention is based is, precisely, to provide a kneadable dough, comparable to modelling clay and the like, from which an edible product can be produced in a specific shape attractive to children.

The invention relates in particular to a preparation as described above in which A is a mixture of sucrose and dextrose, the weight ratio of sucrose to dextrose being between 99:1 and 75:25. Other ratios are possible, but, as far as taste and price are concerned, are not preferred. Moreover, with some mixtures of sugars and/or sugar substitutes, such as certain sucrose/dextrose mixtures, undesired crystallisation phenomena occur or an undesired sticky mass is obtained. This is the case, for example, with a mixture containing a sucrose:dextrose ratio of 1:1.

It is also possible to prepare "sugar-free" confectionery, in which constituent A contains one or more polyols.

The invention preferably relates to a preparation as described above, in which constituent B is a water-binding agent or a binder soluble in cold water, which are selected from the group comprising gelatine, modified or unmodified starch, gum arabic, xanthan gum, dextrin, chicken protein, pectin, agar, guar gum, carob bean flour, tragacanth, lactoprotein, alginate and carrageenan.

An example of a binder which is suitable for use consists of a predominant proportion of gelatine and a minor proportion of starch. The gelatine must be soluble in cold water and acts as binder, whilst the starch acts as an anti-coagulant. The starch here is a native corn starch.

As already stated, the quantity of binder used can be as small as possible and can even be 0, although the results obtained are then less good. In particular, the amount of binder is 0.1-5 % by wt, based on the total preparation.

The following may be mentioned as examples of constituent C: citric acid, lactic acid, malic acid and other generally known additives which are commonly used for mass-produced confectionery.

The confectionery preparation according to the invention has a particularly surprising effect if constituent C comprises a colorant which, after adding water, produces a differently coloured mass. For instance, a colorant can be added to a white pulverulent preparation with strawberry taste, which colorant colours the preparation pink or red after adding water.

The confectionery preparation according to the invention also has a particularly surprising effect if it is not white or colourless but has its own colour, in which case C comprises a colorant which, after adding water, produces a mass which has a colour different from that of the pulverulent starting preparation. For example, a yellow preparation can be coloured green with a blue colorant.

The invention also relates to a method for making a kneadable confectionery mass by mixing the abovementioned constituents A, B and C with water, the ratio of the total quantity by weight of ( A + B + C ) : water being between 5:1 and 20:1. For instance, individual commercial packs, such as sachets, can contain, for example, 40 g of pulverulent confectionery preparation according to the invention, to which, for example, 4 ml (= 4 g) of water has to be added in order - after mixing and kneading - to obtain a mass (dough) suitable for modelling.

The setting time for the confectionery can be a few minutes, but also many hours, depending on the nature of the constituents A, B and/or C. It is self-evident that children must be able to bring the confectionery dough into the desired shape, and a setting time of at least a few minutes, for example at least 5 minutes, is therefore desirable. The setting time can, however, equally well be many hours, for example 1-10 hours, or even days.

According to the invention the preparation as described above is contained within a sealed container such as a sachet made of plastic or paper, such as aluminium-coated paper.

The play product or basic pack according to the invention optionally contains instructions for use and ideas for shaping.

As indicated above, the invention also relates to a refill pack suitable for topping up the basic pack defined above, which refill pack contains a suitable quantity of the preparation according to the invention described above, which quantity, for example, is identical to that in the sealed container which is in the basic pack. In this way, the consumer is able to provide the same quantity of new starting materials time and again for the basic pack purchased. However, it is self-evident that the refill pack can be filled with all sorts of suitable quantities and types of preparation.

The play product according to the invention is in general a pack which is offered for sale in supermarkets and other shops and which contains all components required for making your own confectionery. Accurate measuring of water is frequently important in order to obtain an optimum consistency of the confectionery dough. It is possible, for example, to supply a measuring beaker with a precise capacity of 4 ml with a make-your-own confectionery pack containing 40 g of pulverulent confectionery preparation. A pack according to the invention contains, for example

- 6 sachets of confectionery powder, each containing 40 g of preparation

  * 2 × strawberry (red)
  * 1 × peach (orange)
  * 1 × pineapple (yellow)
  * 2 × apple (green)

- 1 rolling pin
- 1 measuring beaker
- 3 push-out moulds
- 1 knife
- 1 set of instructions for use, with ideas.

The instructions for use can, for example, read as follows:

Before you start, collect a bowl, a fork, scissors and water.

Now you can make your own sweets all on your own, in the shape you think is nicest.

What do you have to do?

First wash your hands and clean the table/draining board. Cut off a corner from one pack of powder. Put this powder in the bowl. Now fill the measuring beaker with 4 ml water (up to mark 4 on the measuring beaker).

Add the water to the powder and mix as well as you can using the fork, until you have a mixture which is (usually) fairly crumbly.

Pick up the dough in your hands and knead it until it holds together.

The dough is now ready to use. You can now make your own sweets, using the rolling pin, the moulds or just your hands.

You can eat your sweets straight away if you want to, but you can also leave them to stand for a few hours until they have set hard.

If you leave your sweets to dry a little, you will find them easier to pick up.

Note!

If the dough is too wet (sticky) you must carry on kneading or wait a while to let your dough dry a little.

If the dough is too dry, you can add some water. Do this very carefully. Very often just one drop (!) is enough.

What can you make?

A star or something else which you can punch out using the moulds. A tray with little sweets on it. A face. A plate with your name on it. A board for a game with the pieces (noughts and crosses). A dice. An animal (a parrot or a fish). A heart. A car. A cup and saucer. A shoe. Etc.

And there is even more you can do

Of course, you can also use other things, such as:

- a garlic press to make the hair for a face.
- the moulds in your modelling clay kit (but make sure you clean them well first !)

And other food products:

- chocolate vermicelli or 'hundreds and thousands' for decoration

- liquorice sweets to make eyes.

How do I make .....?

A face:

1. Roll out the dough with the rolling pin.
2. Cut out a circle about 5 cm in diameter.
3. Use the rest of the dough to make the hair, by, for example, kneading this through a garlic press.
4. Make the eyes, nose and mouth by kneading the dough into the right shape. Of course, you can also use other edible things for this, such as small round sweets or chocolate vermicelli.

How do I make....?

A dice:

1. Knead the dough into a cube shape.
2. Make the "spots" by using a wooden cocktail stick, for example. First make 6 spots on one side and 1 spot on the opposite side. Then make 5 spots and 2 spots on the opposite side. Then 4 spots and 3 spots on the opposite side.

Now you have a dice.

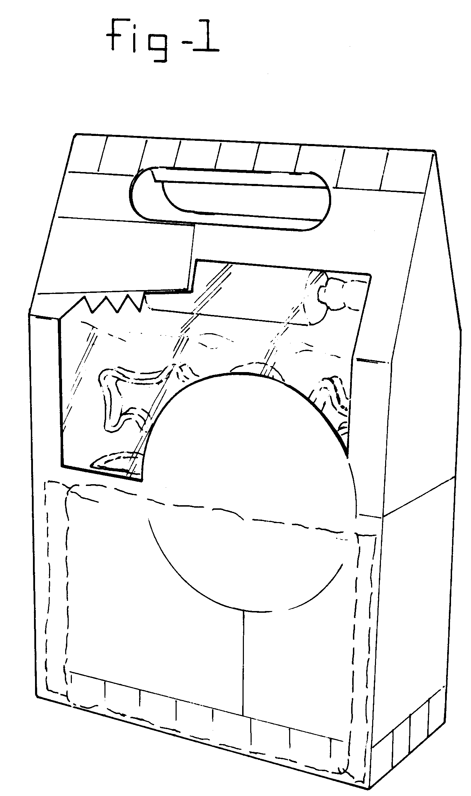

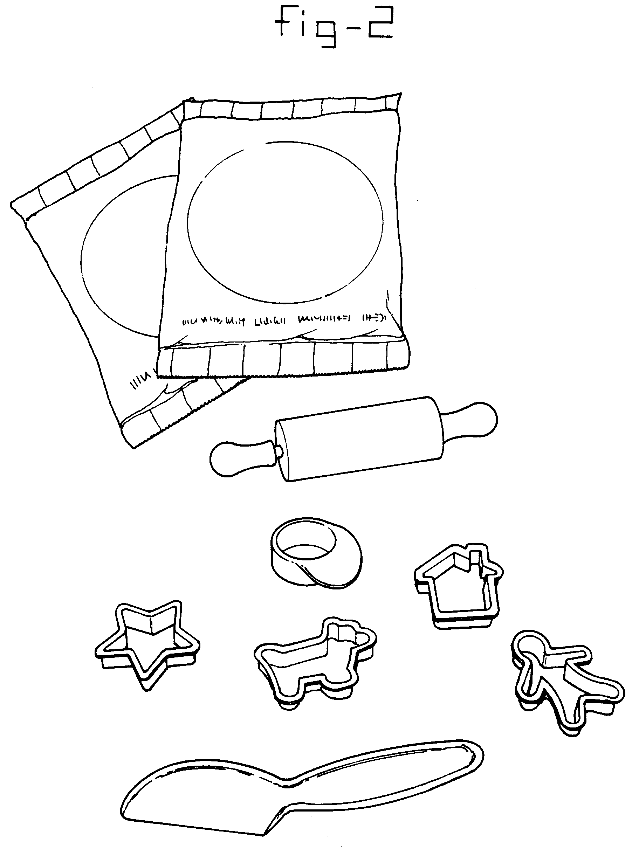

The invention is explained with reference to the appended Figures 1 and 2.

Fig. 1 shows a box pack, part of which is transparent so that the contents (coloured moulds, rolling pin, measuring beaker and one or more sachets of confectionery powder) are fully or partially visible and thus attractive to the consumer.

Fig. 2 shows the contents of the box from Fig. 1, that is to say a few sachets of confectionery powder, moulds, a rolling pin, a spatula and a measuring beaker in the shape of a cap.

**Claims**

1. Children's play product, comprising a prepacked pulverulent confectionery preparation, suitable for making a kneadable dough, and means for shaping the dough.

2. Play product according to Claim 1, characterised in that one or more sealed sachets containing confectionery preparation and one or more small moulds for holding dough made from the powder are contained in a box pack.

3. Play product according to Claim 2, characterised in that the box pack also contains a rolling pin.

4. Play product according to Claim 2 or 3, characterised in that the tastes and/or colours of the pulverulent confectionery preparation in the sachets differ from one another.

5. Play product according to one of Claims 2 to 4, characterised in that the confectionery preparation is of a composition such that the dough sets hard after a certain time, for example a few hours.

6. Play product according to one of Claims 2 to 5, characterised in that the pack contains a measuring beaker for measuring out water.

7. Play product according to one of Claims 2 to 6, characterised in that the pack contains a spatula.

8. Refill product intended for the play product according to one of Claims 1 to 7, comprising one or more sealed sachets of confectionery powder.

9. Play product according to one of the preceding claims, characterised in that the confectionery preparation comprises the following substances:

   A one or more pulverulent edible sugars or sugar substitutes, chosen from the saccharides group, such as sucrose, dextrose, lactose, maltose or fructose, or from the polyols group, such as lactitol and sorbitol, or polydextrose;
   B at least one binder which, after adding water to the pulverulent preparation and mixing, produces a kneadable, essentially coherent mass,
   C optionally other additives customary for confectionery, such as colorants, flavourings, aroma substances and edible acid.

10. Play product according to Claim 9, wherein the confectionery preparation contains
    90 - 99.9 % by wt A
    0.1 - 10 % by wt B
    0.1 - 10 % by wt C,
    where the said quantities are related to the total weight of the preparation, and the sum of the quantities of A, B and C makes up a total of 100 % by wt.

11. Play product according to Claim 9 or 10, wherein A is a mixture of sucrose and dextrose and the weight ratio of sucrose to dextrose is between 99:1 and 75:25.

12. Play product according to one of Claims 9 to 11, wherein B is a water-binding agent or a binder soluble in cold water, which are selected from the group comprising gelatine, modified or unmodified starch, gum arabic, xanthan gum, dextrin, chicken protein, pectin, agar, guar gum, carob bean flour, tragacanth, lactoprotein, alginate and carrageenan.

13. Play product according to one of Claims 9 to 12, wherein the preparation is coloured, colourless or white and C comprises a colorant which, after adding water, produces a coloured mass.

14. Play product according to one of Claims 9 to 12, wherein the preparation is coloured, wherein C comprises a colorant which, after adding water, produces a mass which has a colour which differs from that of the pulverulent starting preparation.

15. Method for making a kneadable confectionery mass using a play product according to one of Claims 9 to 14, by mixing the constituents A, B and C with water, wherein the ratio of the total quantity by weight of ( A + B + C ) : water is between 5:1 and 20:1.

# fig-1

# fig-2

**European Patent Office**

**EUROPEAN SEARCH REPORT**

Application Number

EP 96 20 2768

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | WO 94 04609 A (JOUETS BO JEUX TOYS INC)<br><br>* page 2, line 14 - line 26 *<br>* claim 1 *<br>--- | 1,5,<br>9-13,15 | A63H33/00<br>A63F9/00<br>A23G3/00 |
| D,Y | GB 2 209 917 A (BEVERLEY ANDREA DUTTON)<br><br>* the whole document *<br>--- | 1,5,<br>9-13,15 | |
| A | EP 0 236 515 A (BANDAI CO)<br>* the whole document *<br>--- | 1 | |
| A | WO 90 11110 A (MOREAU CLAUDE R)<br>* page 1, line 7 - line 11 *<br>* page 2, line 8 - line 14 *<br>* claims 1,17,18,20 *<br>--- | 1 | |
| A | US 5 380 539 A (SPECTOR DONALD)<br>* the whole document *<br>--- | 1 | |
| D,A | US 4 097 616 A (JEAN PIERRE GUILLOU ET AL.)<br>* column 3, line 11 - column 5, line 39 *<br>* examples I,II *<br>* claims 1,4 *<br>--- | 1,9-15 | TECHNICAL FIELDS SEARCHED (Int.Cl.6)<br><br>A63H<br>A63F<br>A63G |
| A | US 3 961 980 A (BRYANT R. DUNSHEE)<br><br>* the whole document *<br>--- | 1,9,11,<br>12,15 | |
| A | US 4 889 728 A (MASAO MAEDA ET AL.)<br>* claim 1 *<br>--- | 1 | |
| A | EP 0 268 840 A (PREGEL)<br><br>* page 2, line 20 - line 25 *<br>* page 2, line 38 - page 3, line 4 *<br>* page 3, line 26 - line 41 *<br>--- | 1,9,12,<br>15 | |

-/--

The present search report has been drawn up for all claims

| Place of search | Date of completion of the search | Examiner |
|---|---|---|
| THE HAGUE | 6 February 1997 | Dekeirel, M |

## EUROPEAN SEARCH REPORT

European Patent
Office

Application Number

EP 96 20 2768

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Week 8342<br>Derwent Publications Ltd., London, GB;<br>AN 83-791893<br>XP002004776<br>& JP 58 152 449 A (SHIRAI CHOHO-DO KK) ,<br>10 September 1983<br>* abstract *<br>----- | 1 | |

TECHNICAL FIELDS
SEARCHED      (Int.Cl.6)

The present search report has been drawn up for all claims

| Place of search | Date of completion of the search | Examiner |
|---|---|---|
| THE HAGUE | 6 February 1997 | Dekeirel, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)